# EUROPÄISCHE PATENTSCHRIFT

(11) **EP 2 210 832 B1**
(45) Veröffentlichungstag und Bekanntmachung des Hinweises auf die Patenterteilung: **04.01.2012**
(21) Anmeldenummer: 10004234.0
(22) Anmeldetag: 07.03.2006
(51) Int. Cl.: B65G 17/42, F16C 33/50, B65G 35/00, B65G 17/08, B65G 39/20

(54) **Fördervorrichtung und Rollkörper**
Conveyor device and roller body
Dispositif de transport et roulement à billes

(30) Priorität: 11.03.2005 WO PCT/CH2005/000144; 20.05.2005 CH 8782005
(43) Veröffentlichungstag der Anmeldung: 28.07.2010
(62) Teilanmeldung aus: 06705380.1
(73) Patentinhaber: WRH Walter Reist Holding AG, 8272 Ermatingen (CH)
(72) Erfinder: Reist, Walter, 8340 Hinwil (CH); Müller, Erwin, 8635 Dürnten (CH)
(74) Vertreter: Frei Patent Attorneys

(56) Entgegenhaltungen:
- EP-A- 0 139 287
- EP-A- 0 890 755
- DE-B- 1 273 415
- US-A- 4 598 957
- US-A- 5 549 391
- US-B1- 6 203 200

## Beschreibung

Die Erfindung liegt im Gebiet der Fördertechnik und bezieht sich auf einen Rollenkörper gemäss dem Oberbegriff des Anspruchs 1 sowie eine Fördervorrichtung mit einem Solchen Rollenkörper.

Ein solcher Rollenkörper ist z.B. aus der US 4,598,957 bekannt.

Insbesondere betrifft die Erfindung Fördervorrichtungen zum Transport von einzelnen Objekten oder Schüttgut in einer fliessenden Förderbewegung. Dabei stellt sich unter anderem die Aufgabe, Fördervorrichtungen mit einfachen und kostengünstigen Mitteln zu realisieren.

US 4,598,957 zeigt ein Linearwälzlager mit einem Lagerkäfig, bei welchem zylindrische oder kugelförmige Wälzkörper jeweils in einem Lagerkörper eingesetzt sind, und dieser Lagerkörper wiederum in einem Lagerband eingesetzt ist. Dabei ist der Lagerkörper kleiner als eine Öffnung des Lagerbandes gestaltet und ist zum Ausgleich von Bewegungen bezüglich des Lagerbandes verschiebbar.

Die Aufgabe wird gelöst durch einen Rollenkörper sowie eine Fördervorrichtung gemäss den entsprechenden unabhängigen Patentansprüchen.

Weitere bevorzugte Ausführungsformen gehen aus den abhängigen Patentansprüchen hervor.

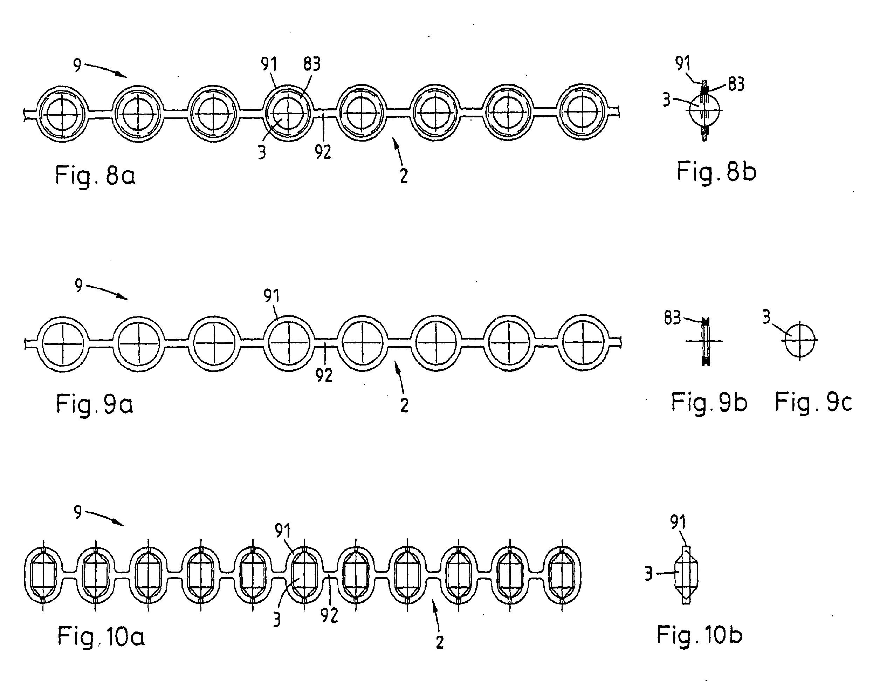

Im folgenden wird der Erfindungsgegenstand anhand von bevorzugten Ausführungsbeispielen, welche in den Figuren 8 und 9 dargestellt sind, näher erläutert. Es zeigen jeweils schematisch:
- Figur 1: eine Fördervorrichtung in einer Aufsicht;
- Figur 2: dieselbe Fördervorrichtung im Querschnitt;
- Figuren 3 und 4: eine weitere Fördervorrichtung in einer Aufsicht und im Querschnitt;
- Figur 5: eine Bewegung von Förderkörpern in einer gekrümmten Ausführungsform der weiteren Fördervorrichtung;
- Figur 6: entsprechende Förderkörper;
- Figur 7: eine Fördervorrichtun mit umlaufenden Förderkörpern;
- Figuren 8 und 9: Rollenkörper gemäß der Erfindung;
- Figuren 10 bis 18: Rollenkörper mit walzenförmigen Rollen; und
- Figuren 19 bis 20: weitere Anwendungen von Rollenkörpern.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

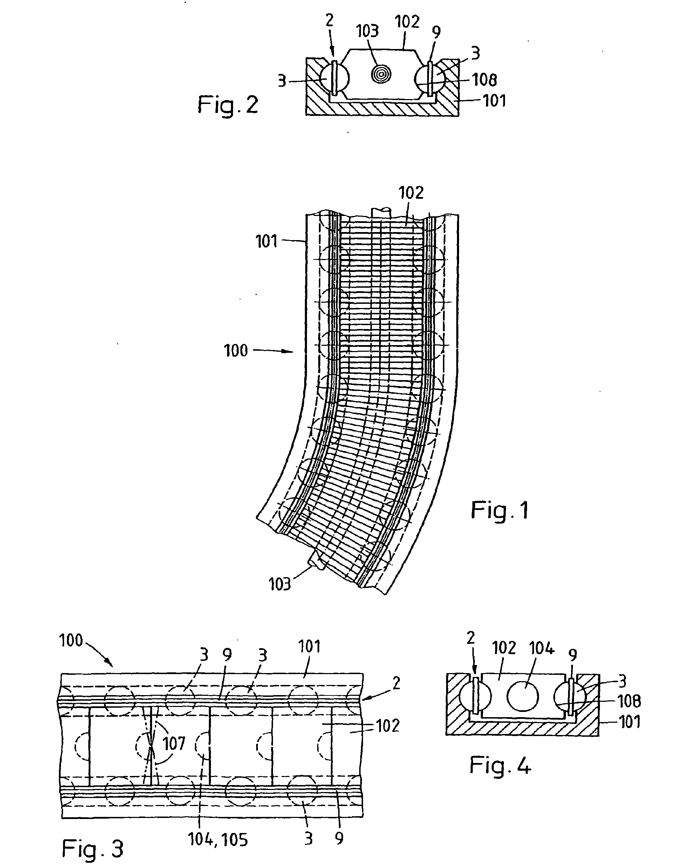

**Figur 1** zeigt eine Fördervorrichtung 100 in einer Aufsicht, und **Figur 2** im Querschnitt. In einer Führungsschiene 101 sind in Längsrichtung hintereinander mehrere Förderkörper 102 durch beidseitig verlaufende Rollenkörper 2 geführt und abgestützt. Die Förderkörper 102 weisen beiderseits je eine Führungsnut 108 auf, die mit der Form der Rollen 3 korrespondiert. Die Rollenkörper 2 weisen Verbindungskörper 9 und darin gelagerte Rollen 3 auf. Die Förderkörper 102 sind einzelne Blöcke oder aber Lamellen, wobei in der Längsrichtung jeweils mehrere Lamellen pro Rolle 3 vorliegen. Die Blöcke oder Lamellen sind durch eine Seele 103, d.h. ein die Förderkörper 102 durchlaufendes flexibles Seil, Kabel oder Monofilament miteinander verbunden. Dabei ist die Seele 103 lose durch die Förderkörper 102 geführt, oder ist die Seele 103 mit den Förderkörpern 102 verbunden, was eine Torsion der Förderkörper 102 um die Seele 103 einschränkt. In beiden Fällen stützt die Seele 103 die Förderkörper 102 in den Bereichen in welchen die Förderkörper 102 nicht durch den Rollenkörper 2 selber gestützt sind.

**Figuren 3** und **4** zeigen eine weitere Fördervorrichtung 100 in einer Aufsicht und im Querschnitt. Hier sind die Förderkörper 102 als Blöcke geformt. Es liegt in Längsrichtung rund ein Förderkörper 102 pro Rolle 3 vor. Damit die Förderkörper 102 nicht aus der Führungsschiene 101 herausfallen, sind die Förderkörper 102 mit Verbindungselementen 104, 105 zur gegenseitigen Abstützung versehen. Hier sind dies jeweils korrespondierend geformte Gelenkausbuchtungen 104 und Gelenkeinbuchtungen 105, wie anhand der folgenden Figuren erläutert wird.

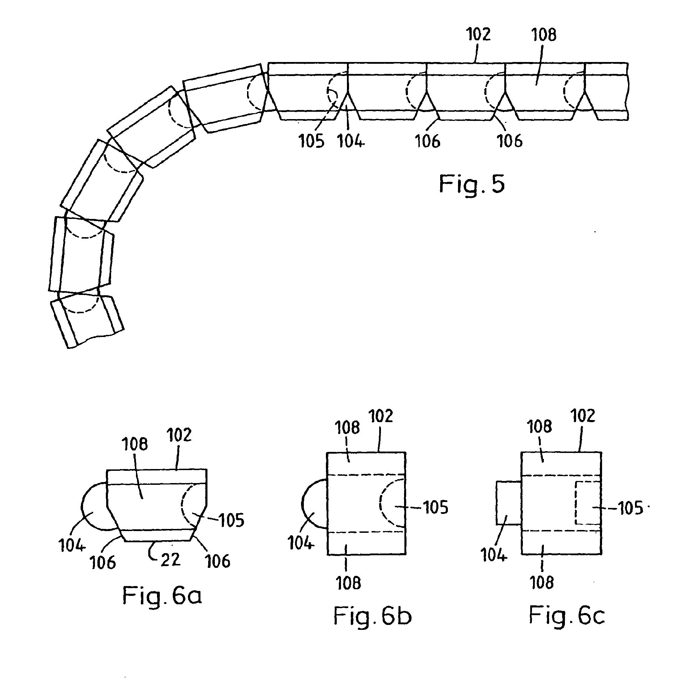

**Figur 5** zeigt eine Bewegung von Förderkörpern 102 in einer gekrümmten Ausführungsform der weiteren Fördervorrichtung 100. **Figur 6** zeigt entsprechende unterschiedliche Varianten einzelner Förderkörper 102 in einer gemeinsamen Seitenansicht 6a und in unterschiedlichen Aufsichten 6b, 6c. Die Gelenkausbuchtungen 104 und die Gelenkeinbuchtungen 105 sind kugelförmig (**Figur 6b**) oder zylinderförmig (**Figur 6c**), wobei jeweils eine Gelenkausbuchtung 104 eines Förderkörpers 102 in eine Gelenkeinbuchtung 105 eines anschliessenden Förderkörpers 102 passt. Die Förderkörper 102 weisen beiderseits je eine Führungsnut 108 auf, die mit der Form der Rollen 3 korrespondiert.

Die beiden Rollenkörper 2 der Fördervorrichtung 100 respektive ihre Bewegungsrichtung verlaufen somit in einer Ebene im wesentlichen parallel zu beiden Seiten der Förderkörper 102 und deren Bewegungsrichtung, wobei die Mittel 104, 105 zur gegenseitigen Abstützung eine Relativbewegung der Förderkörper 102 senkrecht zu dieser Ebene verhindern. Bei einer Krümmung der Führungsschiene 101 ist die Bewegungsrichtung als Tangentiale zu verstehen.

Um, wie in **Figur 5**, eine Bewegung der Förderkörper 102 aus dieser Ebene heraus zu ermöglichen, weisen die Förderkörper 102 erste Abschrägungen 106 auf zwischen den Stirnseiten und einer Innenseite 22 auf. Diese Abschrägungen beginnen, in einer seitlichen Projektion wie in **Figur 5** oder **Figur 6a** zu sehen, am Ort der Zylinderachse respektive des Kugelmittelpunktes. Die ersten Abschrägungen 106 führen von da aus zur Innenseite 22 des Förderkörpers 102, so dass sich eine Folge von Förderkörpern 102 in Richtung ihrer Innenseiten 22 krümmen kann, wobei sich jeweils zwei Förderkörper 102 gegeneinander um das dazwischen liegende Gelenk 104, 105 drehen. Werden die Förderkörper 102 gegeneinander gedrückt, so liegen ihre Stirnflächen im oberen Teil satt aneinander an und verhindern ein Einknicken der Förderkörper 102 nach unten.

In einer weiteren Fördervorrichtung liegen zweite Abschrägungen 107 an der Stirnseite vor, welche eine Krümmung einer Folge von Förderkörpern 102 in derselben Ebene erlauben, entlang welcher Ebene sich die Förderkörper 102 und die seitlich der Förderkörper 102 verlaufenden Rollenkörper 2 bewegen. Dazu führen die zweiten Abschrägungen 107, in einer Projektion von oben, also in einer Ansicht wie bei den **Figuren 3****,** **6b** oder **6c**, von einer Linie durch den Kugelmittelpunkt zu den Seiten links und rechts des Förderkörpers 102. Durch den Kontakt entlang dieser Linie ist die gegenseitige Abstützung der Förderkörper 102 gegen ein Einknicken nach unten weiterhin gewährleistet. Zweite Abschrägungen 107 sind beispielhaft in der **Figur 3** strichliert eingezeichnet.

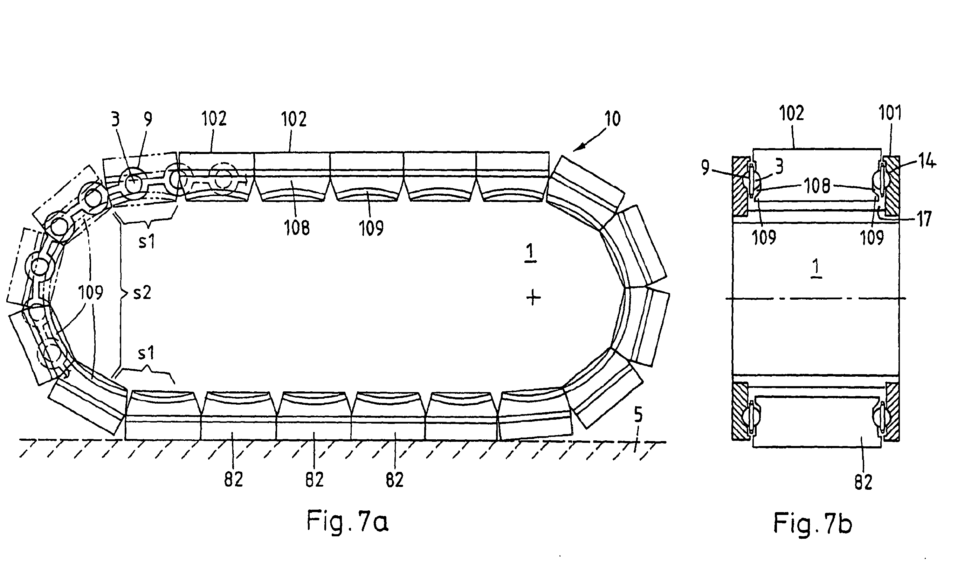

**Figur 7** zeigt eine Fördervorrichtung 100 mit umlaufenden Förderkörpern 102 in einer Seitenansicht 7a und im Querschnitt 7b. Die Förderkörper 102 verlaufen in einer Förderbahn 17 und sind seitlich durch einen Rollenkörper 2 mit kugelförmigen Rollen 3 in Lagernuten 14 der Förderbahn 17 gelagert. Alternativ zum Rollenkörper 2 mit Kugeln kann auch einer der weiter unten vorgestellten Rollenkörper 2 mit Walzen verwendet werden. Bei einer fest montierten Förderbahn 17 oder Führungsschiene ist die Anzahl der Förderkörper 102 in der Regel grösser als eingezeichnet und bildet so ein Förderband oder eine Förderkette. Dazu können die Förderkörper 102 z.B. mit Greifern versehen sein. Die Förderkörper 102 können durch ihre Bewegung Stück- oder Schüttgut transportieren.

In einer anderen Einsatzweise kann die Anordnung gemäss der **Figur 7** als Rollenelement 10 ausgebildet sein, welches über die Förderkörper 102, die dabei als Auflagekörper 82 funktionieren an einem strichliert eingezeichneten Gegenkörper 5 abrollen kann. Ein Zentralkörper 1 des Rollenelements 10 sowie damit verbundene Objekte können so als Ganzes bezüglich des Gegenkörpers 5 gefördert werden. Die Auflagekörper 82 und die Rollenkörper 2 ersetzten so eine Lagerung des Zentralkörpers 1 durch Räder.

Beim Übergang zwischen dem geraden Abschnitt und dem gekrümmten Abschnitt s2 mit einem bestimmten ersten Kurvenradius weist die Führungsschiene 101 vorzugsweise einen Zwischenabschnitt s1 mit einem grösseren Kurvenradius als dem ersten Kurvenradius auf. Dadurch wird verhindert, dass, wenn beim Einfahren eines Förderkörpers 102 in den gekrümmten Bereich der Förderkörper 102 abkippt, der nachfolgende Förderkörper 102 vom Zentralkörper 1 weg abgehoben wird.

In einer weiteren Fördervorrichtung ist ein Führungsvorsprung 109, der die Führungsnut 108 nach innen hin begrenzt, gekrümmt. Dadurch bilden in dem gekrümmten Bereich der Umlaufbahn 17 die aneinanderstossenden Führungsvorsprünge 109 zumindest annähernd ein Kreissegment, entlang welchem die Rollen 3 in einer regelmässigen Bewegung abrollen können.

**Figuren 8** und **9** zeigen Rollenkörper 2 gemäß der Erfindung. **Figuren 8a** und **8b** zeigen den kompletten Rollenkörper 2 in einer Aufsicht **8a** und einem Querschnitt **8b**. **Figuren 9a**, **9b** und **9c** zeigen einen Verbindungskörper 9 oder Käfigband, einen Rollenring 83 im Querschnitt und eine kugelförmige Rolle 3. Der Verbindungskörper 9 weist einerseits ringartige Haltebereiche 91 auf, in welche die Rollen 3 mittels der Rollenringe 83 eingesetzt sind, und andererseits Gelenkbereiche 92, welche die Haltebereiche 91 flexibel miteinander verbinden. Die Rollenringe 83 sind beispielsweise einstückig aus Kunststoff gefertigt, und weisen eine Innenfläche entsprechend einer Kugelfläche auf, so dass die Kugeln in die Ringe 83 eingeknipst werden können. Die Rollenringe 83 weisen am äusseren Rand eine umlaufende Nut auf, mittels derer sie in kreisförmige Öffnungen von Haltebereichen 91 des Verbindungskörpers 9 eingesetzt sind. Der Verbindungskörper 9 ist vorzugsweise aus einem elastischen Flachmaterial aus Kunststoff oder Gummi oder einem Mischgewebe gefertigt, beispielsweise durch Stanzen oder Wasserstrahlschneiden.

In einer anderen bevorzugten Ausführungsform der Erfindung weist der Verbindungskörper 9 keine schmalen Gelenkbereiche 92 auf, sondern ist ein Band mit gleichbleibender Breite, in welches die Rollen 3 eingesetzt sind.

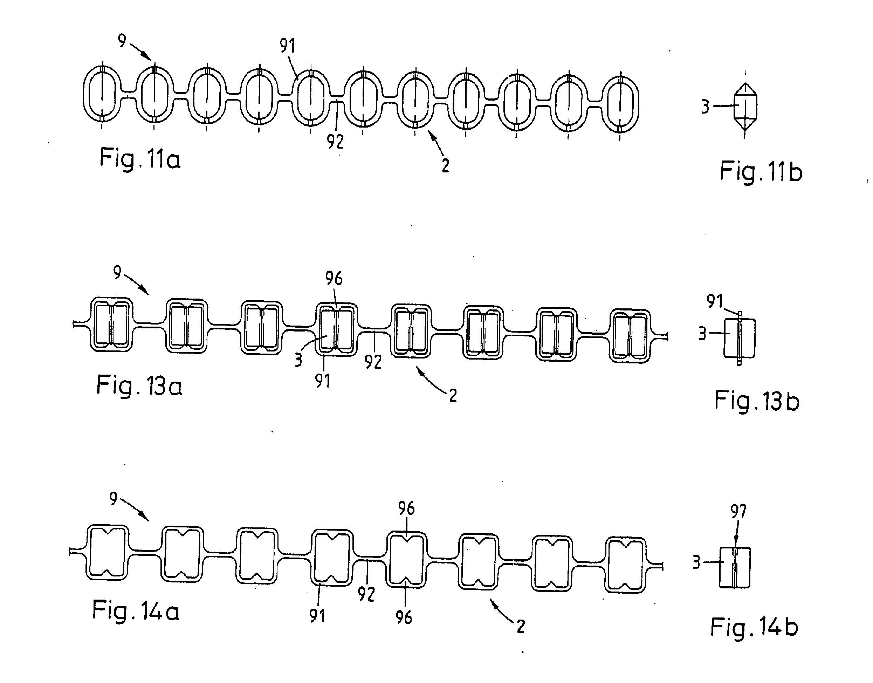

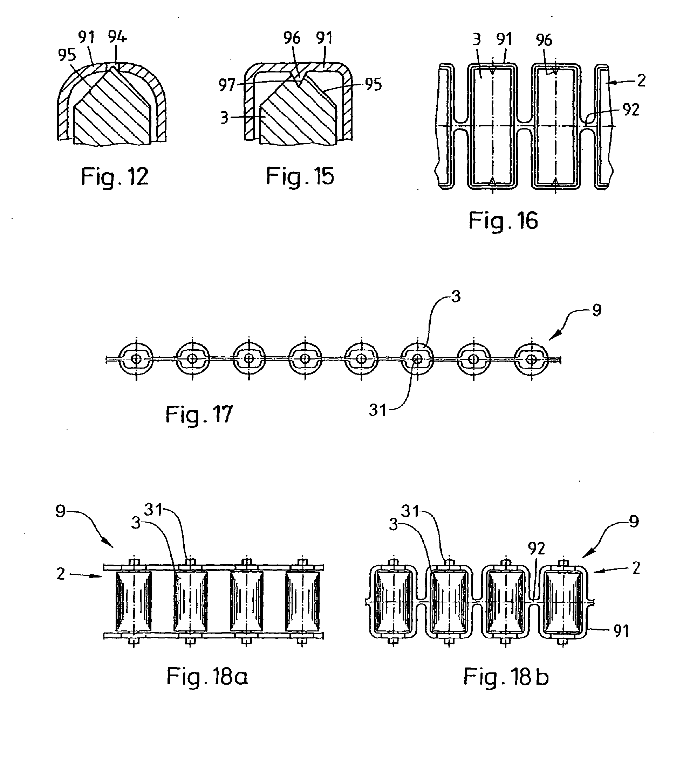

**Figuren 10** bis **18** zeigen Rollenkörper mit walzenförmigen Rollen, welche Rollenkörper kein Teil der Erfindung sind. **Figuren 10a** und **10b** zeigen einen Rollenkörper 2 in einer Aufsicht **10a** und einem Querschnitt **10b.** **Figuren 11a**, und **11b** zeigen einen Verbindungskörper 9 oder Käfigband und eine walzenförmige Rolle 3. Der Verbindungskörper 9 weist einerseits ringartige Haltebereiche 91 auf, in welche die Rollen 3 eingesetzt sind, und andererseits Gelenkbereiche 92, welche die Haltebereiche 91 flexibel miteinander verbinden. Der Verbindungskörper 9 ist vorzugsweise einstückig und besteht aus einem flexiblen oder elastischen aber nicht weichelastischen Material, beispielsweise einem Kunststoff wie Nylon. Er ist durch Spritzguss oder aus einem Flachmaterial gefertigt, beispielsweise durch Stanzen oder Wasserstrahlschneiden. Die Rollen 3 sind ebenfalls aus Kunststoff oder aber aus Metall, insbesondere Stahl gefertigt. In dieser Ausführungsform sind die Rollen 3 in Achsrichtung konisch und spitz zulaufend, wodurch konische Achselemente 95 gebildet werden, wie in der Detailansicht gemäss der **Figur 12** zu sehen. An den Innenseiten der Haltebereiche 91 sind jeweils einander gegenüberliegend entsprechende Vertiefungen wie z.B. Innenkonusse als Lagerstellen 94 geformt. Diese Innenkonusse bewirken eine Lagerung für die Rollen 3. Anstelle von konischen Elementen kann natürlich auch eine andere Form für die Lagerung verwendet werden, beispielsweise eine zylindrische. Die Verbindung durch die Gelenkbereiche 92 ist, in Laufrichtung der Rollen 3 betrachtet, zumindest annähernd bei der Mitte der Rollen 3 angeordnet. Ein solches Käfigband 9 lässt sich innerhalb einer Ebene senkrecht zu den Rollenachsen biegen, und kann so mit einem Zentralkörper 1 gemäss beispielsweise der **Figur 7** verwendet werden.

Dank der flexiblen und einzigen Verbindung durch die Gelenkbereiche 92 ist der Verbindungskörper 9 aber auch aus dieser Ebene heraus biegbar, so dass der Zentralkörper 1 nicht eine ebene Umlaufbahn aufweisen muss. Ferner ist das Käfigband 9 durch die Gelenkbereiche 92 tordierbar und somit kann auch der Rollenkörper 2 einer Bahn, die eine Torsion des Rollenkörpers 2 bedingt, folgen. Ein solcher Rollenkörper 2 lässt sich also vielseitig einsetzen und kann dazu auf einfache Weise in grossen Stückzahlen hergestellt werden.

**Figuren 13** und **14** zeigen einen weiteren Rollenkörper 2, der kein Teil der Erfindung ist, in einer Aufsicht **13a** und einem Querschnitt **13b**. **Figuren 14a,** und **14b** zeigen einen entsprechenden Verbindungskörper 9 oder Käfigband und eine walzenförmige Rolle 3. Diese sind in ähnlicher Weise herstellbar wie jene der Figuren 10 und 11. Für die Herstellung der Rolle 3 ist eine weitere Vereinfachung möglich, da diese durch ihre einfache Form entweder als einzelnes Spritzgussteil oder durch Abschneiden von einem dickwandigen Rohr hergestellt werden kann. Die Rollen 3 weisen in dieser Ausführungsform der also zwei Einbuchtungen 97 zur Lagerung auf, wobei diese Einbuchtungen 97 auch durch ein durchgehendes Loch entlang der Rollenachse gebildet sein können. Der Haltebereich 91 des Verbindungskörpers 9 weist gegenüberliegende Lagervorsprünge 96 auf, die beim Einsetzen der Rollen 3 in die Einbuchtungen 97 einschnappen. Um dies zu vereinfachen sind die Lagervorsprünge 96, wie auch die Achselemente 95 der vorherigen, vorzugsweise sich verjüngend und insbesondere spitz zulaufend ausgestaltet.

**Figur 15** zeigt eine weitere Variante mit einem Lagervorsprung 96 am Haltebereich 91 in einer Detailansicht. **Figur 16** zeigt eine Variante eines Rollenkörpers 2 mit anderen Proportionen. **Figur 17** zeigt eine Variante eines Rollenkörpers 2, bei welcher die Rollen 3 hervorstehende Lagerachsen 31 aufweisen, die in Lageröffnungen des Verbindungskörpers 9 gelagert sind. In einer Variante mit einer Aufsicht gemäss der **Figur 18a** weist der Verbindungskörper 9 zwei separate Hälften oder Lagerbänder auf, welche jeweils die Lagerachsen 31 an beiden Seiten des Rollenkörpers 2 verbinden. Dadurch ist der Rollenkörper 2 als ganzes nur in eine Richtung biegbar. Damit der Rollenkörper 2 nicht auseinanderfällt und gleichwohl der Rollenkörper 2 zusammengesetzt werden kann, liegen die Lagerachsen 31 beispielsweise mit einem Presssitz in den Lagerbändern und sind die Rollen 3 um die Lagerachse 31 lose drehbar. In der Variante gemäss der **Figur 18b** ist wie bei den bisherigen Ausführungsformen eine Biegung in zwei Richtungen sowie eine Torsion respektive Verdrehung möglich. Auch hier können die Lagerachsen 31 mit einem Presssitz im Verbindungskörper 9 befestigt sein. Es können aber auch die Lagerachsen 31 fest an die Rollen 3 angeformt sein und lose in den Haltebereichen 91 des Verbindungskörpers 9 liegen.

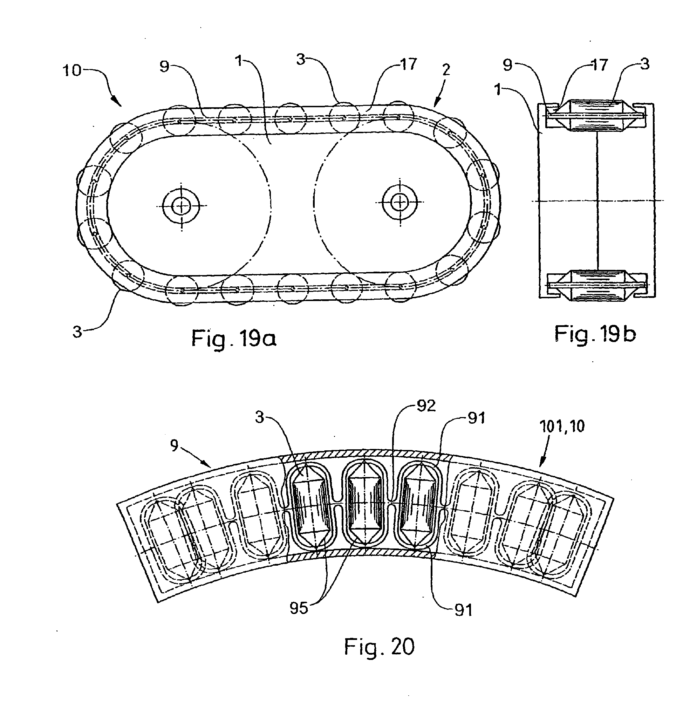

**Figur 19** zeigt ein Rollenelement 10 mit einem Rollenkörper 2 ähnlich jenem der **Figuren 10** und **11**. Der Rollenkörper 2 läuft in einer Umlaufbahn 17 um einen Zentralkörper 1 um und erlaubt so ein Abrollen und damit eine Lagerung des Rollenelements 10 bezüglich eines weiteren Körpers.

**Figur 20** zeigt eine Bewegung eines Rollenkörpers 2 in einer gekrümmten Führungsschiene 101, beispielsweise in einem gekrümmten Rollenelement 10. Von der Bewegungsrichtung des Rollenkörpers 2 aus gesehen, ist hier also die Bewegung der Rollen 3 in zwei Richtungen senkrecht zueinander und zur Bewegungsrichtung gekrümmt.

### Bezugszeichenliste

- 1: Zentralkörper
- 10: Rollenelement
- 12: geradliniger Abschnitt
- 14: Lagernut
- 16: innere Kante der Lagernut
- 17: Förderbahn
- 2: Rollenkörper
- 22: Innenseite
- 3: Rolle
- 31: Lagerachse
- 5: Gegenkörper
- 82: Auflagekörper
- 83: Rollenring
- 9: Käfigband
- 91: Haltebereich
- 92: Gelenkbereich
- 94: Lagerstelle
- 95: Achselement
- 96: Lagervorsprung
- 97: Einbuchtung, Bohrung
- 100: Fördervorrichtung
- 101: Führungsschiene
- 102: Förderkörper
- 103: Seele
- 104: Gelenkausbuchtung
- 105: Gelenkeinbuchtung
- 106: erste Abschrägung
- 107: zweite Abschrägung
- 108: Führungsnut
- 109: Führungsvorsprung

## Patentansprüche

1. **Rollenkörper** (2) für eine Fördervorrichtung (100), aufweisend eine Mehrzahl von linear miteinander verbundenen Rollen (3), wobei die Rollen (3) durch einen flexiblen Verbindungskörper (9) miteinander verbunden und voneinander beabstandet sind, der Verbindungskörper (9) einstückig geformt ist, die Rollen (3) kugelförmig sind und jeweils in Lagerkörpern eingeschnappt sind, welche im Verbindungskörper (9) eingesetzt sind, **dadurch gekennzeichnet, dass** die Lagerkörper Rollenringe (83) sind, welche die Rollen umschliessen, wobei die Rollenringe (83) am äusseren Rand eine umlaufende Nut aufweisen, mittels derer sie in kreisförmige Öffnungen von Haltebereichen (91) des Verbindungskörpers (9) eingesetzt sind.

2. Rollenkörper (2) gemäss Anspruch 1, **dadurch gekennzeichnet, dass** die Rollenringe (83) einstückig aus Kunststoff gefertigt sind und eine Innenfläche entsprechend einer Kugelfläche aufweisen, so dass die Kugeln in die Ringe (83) einknipsbar sind.

3. Rollenkörper (2) gemäss Anspruch 1 oder 2, **dadurch gekennzeichnet, dass** der Verbindungskörper (9) aus einem elastischen Flachmaterial aus Kunststoff oder Gummi oder einem Mischgewebe gefertigt ist.

4. Rollenkörper (2) gemäss Anspruch 1 oder 2 oder 3, **dadurch gekennzeichnet, dass** der Verbindungskörper (9) Gelenkbereiche (92), welche die Haltebereiche (91) flexibel miteinander verbinden, aufweist.

5. Rollenkörper (2) gemäss Anspruch 4, **dadurch gekennzeichnet, dass** der Rollenkörper (2) in mindestens zwei Richtungen biegbar ist, wobei diese beiden Richtungen und eine Bewegungsrichtung des Rollenkörpers (2) jeweils senkrecht zu einander sind.

6. **Fördervorrichtung** (100), aufweisend mindestens einen Rollenkörper (2) gemäss einem der vorangehenden Ansprüche, sowie mehrere Förderkörper (102), welche über die Rollen (3) des Rollenkörpers (2) an einer Führung (101) abrollen.

## Claims

1. Roll body (2) for a conveying device (100) comprising a plurality of linearly connected rolls (3), wherein the rolls (3) are connected and mutually distanced by means of a flexible connecting body (9), the connecting body (9) is made of one piece, the rolls (3) arc ball-shaped and arc each snapped into bearing bodies which are fitted in the connecting body (9), **characterized in that** the bearing bodies are roll rings (83) enclosing the rolls, wherein the roll rings (83) comprise a circumferential groove on the outer edge by which means they are slotted into circular openings of supporting regions (91) of the connecting body (9).

2. Roll body (2) according to claim 1, **characterized in that** the rolls (3) are integrally made of plastic and comprise an inner surface corresponding to a ball surface, so that the balls can snap into the rings (83).

3. Roll body (2) according to claim 1 or 2, **characterized in that** the connecting body (9) is manufactured of an clastic flat material made of plastic or rubber or mixed-fibre.

4. Roll body (2) according to claim 1 or 2 or 3, **characterized in that** the connecting body (9) comprises joint regions (92) which flexibly connect the supporting regions (91).

5. Roll body (2) according to one of claim 4, **characterized in that** the roll body (2) is bendable in at least two directions, wherein these two directions and a movement direction of the roll body (2) are respectively perpendicular to one another.

6. Conveying device (100), comprising at least one roll body (2) according to any one of the preceding claims and several conveying bodies (102) which roll off along a guidance (101) across rolls (3) of the roll body (2).

## Revendications

1. Corps à rouleaux (2) pour un dispositif de convoyage (100), qui présente une pluralité de rouleaux (3) reliés entre eux linéairement, dans lequel les rouleaux (3) sont reliés entre eux par un corps de liaison flexible (9) et sont agences à distance les uns des autres et dans lequel le corps de liaison (9) est formé en un seul tenant, dans lequel les rouleaux (3) sont en forme de billes et sont enclenchés respectivement dans des corps de palier qui sont mis en place dans le corps de liaison (9), **caractérisé en ce que** les corps de palier sont des bagues de rouleau (83) qui entourent les rouleaux, et dans lequel les bagues de rouleau (83) présentent sur le bord extérieur une rainure périphérique au moyen de laquelle elles sont mises en place dans des ouvertures circulaires des zones de maintien (91) du corps de liaison (9).

2. Corps à rouleaux (2) conformément à la revendication 1, **caractérisé en ce que** les bagues de rouleau (83) sont fabriquées en un seul tenant en matière plastique et présentent une surface intérieure en correspondance à une surface de bille de telle sorte que les billes peuvent être encliquetées dans les bagues (83).

3. Corps à rouleaux (2) conformément à l'une ou l'autre des revendications 1 et 2, **caractérisé en ce que** le corps de liaison (9) est fabriqué depuis un matériau plat élastique en matière plastique ou en caoutchouc ou un tissu mixte.

4. Corps à rouleaux (2) conformément à la revendication 1 ou 2 ou 3, **caractérisé en ce que** le corps de liaison (9) présente des zones articulées (92) qui relient les zones de maintien (91) entre elles de manière flexible.

5. Corps à rouleaux (2) conformément à la revendication 4, **caractérisé en ce que** le corps à rouleaux (2) peut être cintré dans au moins deux directions et dans lequel ces deux directions et une direction de mouvement du corps à rouleaux (2) sont respectivement perpendiculaires l'une à l'autre.

6. Dispositif de convoyage (100), qui présente au moins un corps à rouleaux (2) conformément à l'une des revendications précédentes ainsi que plusieurs corps de convoyage (102) qui roulent sur les rouleaux (3) du corps à rouleaux (2) sur un guidage (101).
